# EUROPEAN PATENT APPLICATION

(11) **EP 4 769 432 A1**
(43) Date of publication of application: **01.07.2026**
(21) Application number: 24307347.5
(22) Date of filing: 31.12.2024
(51) Int. Cl.: G21C 3/322, G21C 3/33

(54) **IMPROVED TOP NOZZLE FOR A NUCLEAR FUEL ASSEMBLY**

(71) Applicant: FRAMATOME, 92400 Courbevoie (FR)
(72) Inventor: MESSINGSCHLAGER, Marco, 91346 WIESENTTAL (DE); SOHN, Kevin, 63739 ASCHAFFENBURG (DE); RIEDER, Elmar, 91052 ERLANGEN (DE); THAM, Clement, 69003 LYON (FR); LABARRIERE, Eric, 01800 SAINT-ELOI (FR)
(74) Representative: Lavoix

(57) **Abstract**

The top nozzle comprises a deflection part (16) and an upper part (18), the deflection part (16) comprising a base plate (24) and a guiding assembly (26) configured for connecting the base plate (24) to the upper part (18), the base plate (24) being formed of plate members (38, 42, 48, 50, 52) connected together with defining flow openings (34, 46) between them, each plate member (38, 42, 48, 50, 52) extending along an extension line (E), wherein one or more of the plate members (38, 42, 48, 50, 52) are streamlined, each streamlined plate member (38, 42, 48, 50, 52) exhibiting a streamlined profile in a cross-section perpendicular to the extension line (E) of the streamlined plate member (38, 42, 48, 50, 52).

## Description

The present invention relates to a top nozzle for a nuclear fuel assembly.

A nuclear fuel assembly (or "fuel assembly") comprises nuclear fuel rods (or "fuel rods") arranged in a bundle and a skeleton supporting the fuel rods.

Each fuel rod comprises a tubular cladding containing nuclear fuel (e.g. nuclear fuel pellets, in particular UO₂ pellets), the two ends of the tubular cladding being closed by end plugs.

The skeleton comprises for example a bottom nozzle and a top nozzle spaced along an assembly axis, guide thimbles extending along the assembly axis between the bottom nozzle and the top nozzle with connecting the bottom nozzle and the top nozzle together, and spacer grids attached to the guide thimbles with being distributed along the guide thimbles, between the bottom nozzle and the top nozzle.

The fuel rods extend between the bottom nozzle and the top nozzle with passing through the spacer grids. The function of the spacer grids is to support the fuel rods along the assembly axis and transversely to the assembly axis with maintaining the fuel rods in a spaced relationship.

In operation, the fuel assembly is inserted into a reactor core received into a reactor vessel, with the longitudinal axis of the fuel assembly extending substantially vertically, and a coolant flows vertically through the fuel assembly for moderating the nuclear reaction and for retrieving heat produced by the fuel rods.

When loading a nuclear reactor with nuclear fuel assemblies, the upper end of a nuclear fuel assembly loaded in the nuclear reactor may be impacted by the lower end of another nuclear fuel assembly that is being loaded in the nuclear reactor. This may damage the fuel rods.

In view or preventing or mitigating the effect of such an impact, the top nozzle of a nuclear fuel assembly may be provided with a deflection part exhibiting a downwardly enlarging shape for guiding a lower end of another nuclear fuel assembly that is being loaded away from the fuel rods of the nuclear fuel assembly.

The deflection part may however increase the flow resistance of the top nozzle.

One of the aims of the invention is to provide a top nozzle that allows limiting the flow resistance of the top nozzle, more in particular for a nuclear fuel assembly of the VVER design.

To this end, the invention proposes a top nozzle for a nuclear fuel assembly, the top nozzle having a nozzle axis and being configured for the flow of a coolant fluid along a main flow direction parallel to the nozzle axis, the top nozzle comprising a deflection part and an upper part, the deflection part comprising a base plate and a guiding assembly configured for connecting the base plate to the upper part, the base plate extending along an extension plane perpendicular to the nozzle axis and being formed of plate members connected together with defining flow openings between them, each plate member extending along an extension line, wherein one or more of the plate members are streamlined, each streamlined plate member exhibiting a streamlined profile in a cross-section perpendicular to the extension line of the streamlined plate member.

In specific embodiments, the top nozzle comprises one or more the following optional features, taken individually or in any technically feasible combination:
- the base plate comprises streamlined plate members having a profile parallel to the nozzle axis ;
- the base plate comprises streamlined plate members having a profile parallel to the nozzle axis in a central region of the base plate and/or in a peripheral region of the base plate;
- the base plate comprises streamlined plate members having a profile inclined with respect to the nozzle axis such as to deviate the coolant flow flowing through the base plate;
- the base plate comprises streamlined plate members having a profile inclined with respect to the nozzle axis such as to deviate the coolant flow radially outwardly;
- the base plate comprises streamlined plate members having a profile inclined with respect to the nozzle axis such as to deviate the coolant flow radially outwardly, said streamlined plate members being located in a central region of the base plate ;
- the base plate comprises a central region comprising one or more annular structures, each annular structure being defined by plate members connected together with extending around the nozzle axis;
- the top nozzle comprises two or more concentric annular structures;
- streamlined plate members of the one or more annular structures are inclined with respect to the nozzle axis to deviate the flow of coolant fluid, preferably radially outwardly;
- each annular structure comprises rings defining holes for receiving guide-thimbles of the nuclear fuel assembly passing through the base plate, the rings being connected by plate members of the annular structure;
- the base plate comprises a peripheral region formed of peripheral plate members and intermediate plate members defining peripheral flow openings, the peripheral plate members defining the contour of the base plate and the intermediate plate members extending between a central region of the base plate and the peripheral plate members ;
- the peripheral plate members and the intermediate plate members include streamlined peripheral plate members;
- the peripheral region includes auxiliary plate members extending across the peripheral flow openings;
- the auxiliary plate members are streamlined or at least include streamlined auxiliary plate members;
- each auxiliary plate member has a height taken along the nozzle axis and/or a cross-section area strictly inferior to that of each peripheral plate member and intermediate plate member ;
- one or more streamlined plate members exhibit an airfoil profile, in particular a NACA profile;
- the guiding assembly comprises a top guiding device comprising at least a ring in a plan parallel to the extension plane, the ring extending along a ring extension line and exhibiting a streamline profile in a cross-section perpendicular to the ring extension line, the ring axis coinciding with the nozzle axis and the ring being connected to the guiding members, for example via connection members.

The invention also relates to a nuclear fuel assembly comprising nuclear fuel rods supported by a skeleton comprising a bottom nozzle and a top nozzle according to anyone of the preceding claims, the fuel rods extending between the bottom nozzle and the top nozzle.

The invention and its advantages will be better understood upon reading the following description that is given solely by way of non-limiting example and with reference to the appended drawings, in which:
- Figure 1 is a side elevation view of a nuclear fuel assembly comprising a top nozzle;
- Figure 2 is a perspective view of a deflection part of an improve top nozzle of a nuclear fuel assembly;
- Figure 3 is a top view of the deflection part of Figure 2;
- Figure 4 is a section view of the deflection part of Figure 2 along IV - IV on Figure 3;
- Figure 5 is a cross-sectional view of a streamlined plate member with a profile parallel to the nozzle axis N;
- Figure 6 is a cross-sectional view of a streamlined plate member with a profile inclined with respect to the nozzle axis N.

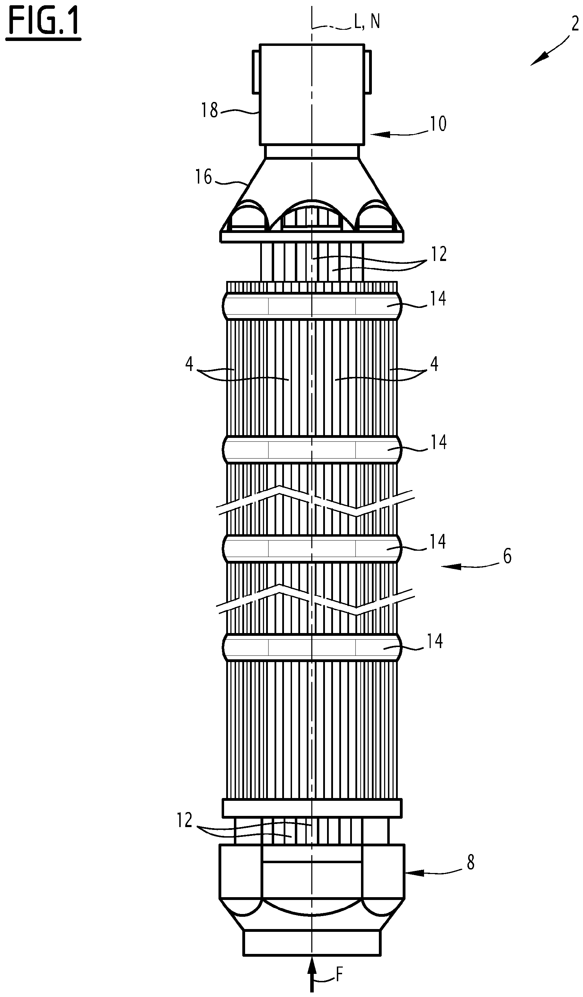

The nuclear fuel assembly 2 of Figure 1 comprises a bundle of nuclear fuel rods 4 and a skeleton 6 for supporting the fuel rods 4. The fuel rods 4 extend parallel to each other and to an assembly axis L.

The skeleton 6 comprises a bottom nozzle 8, a top nozzle 10, a plurality of guide thimbles 12 and a plurality of spacer grids 14.

The bottom nozzle 8 and the top nozzle 10 are spaced along the assembly axis L. The guide thimbles 12 extend parallel to the assembly axis L and connect the bottom nozzle 8 to the top nozzle 10 with maintaining a predetermined spacing along assembly axis L between the bottom nozzle 8 and the top nozzle 10. The fuel rods 4 are received between the bottom nozzle 8 and the top nozzle 10.

The spacer grids 14 are distributed along the bundle of fuel rods 4. Each spacer grid 14 is fixedly attached to the guide thimbles 12, with the guide thimbles 12 extending through the spacer grid 14.

The fuel rods 4 extend through the spaced grids 14. Each spacer grid 14 is configured for supporting the fuel rods 4 in a transversely spaced relationship. Each spacer grid 14 is configured for supporting the fuel rods 4 along the assembly axis L and transversely to the assembly axis L.

In operation, the nuclear fuel assembly 2 is inserted in a reactor core inside a reactor vessel, between a lower core plate and an upper core plate. The bottom nozzle 8 is configured to rest onto the lower core plate. A coolant fluid flows upwardly through the nuclear fuel assembly in a main flow direction illustrated by arrow F. The top nozzle 10 is configured to bear against the upper core plate.

The top nozzle 10 extends along a nozzle axis N. The nozzle axis N coincides with the assembly axis L.

The top nozzle 10 comprises a lower deflection part 16 and an upper part 18. The upper part 18 is configured for bearing against the upper core plate. The deflection part 16 is arranged below the upper part 18. The deflection part 16 is arranged axially between the upper part 18 and the bundle of fuel rods 4.

The deflection part 16 extends along the nozzle axis N with exhibiting a downwardly enlarging shape, in particular a downwardly enlarging frustoconical shape. An upper axial end of the deflection part 16 has a contour of smaller dimensions than a lower axial end of the deflection part 16.

The deflection part 16 is configured for guiding the lower end of another nuclear fuel assembly that is being lowered in a nuclear reactor next to the nuclear fuel assembly away from the bundle of fuel rods 4.

The upper part 18 has for example a cylindrical shape along the nozzle axis N.

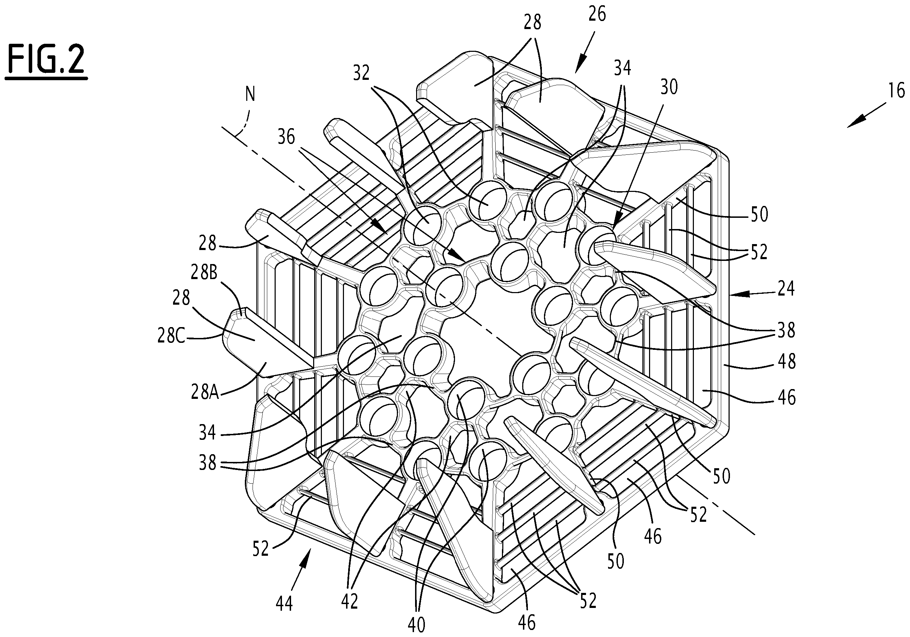

Figures 2 - 4 illustrate a deflection part 16 for a top nozzle 10.

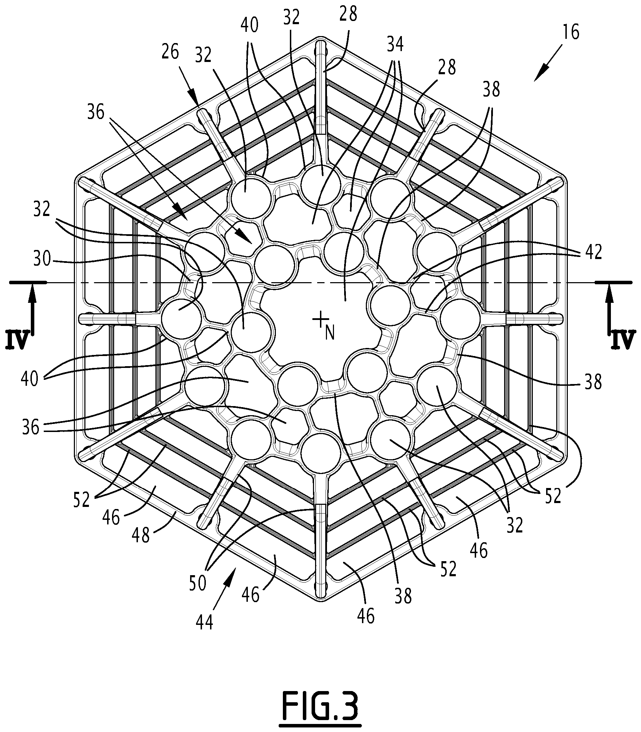

As illustrated on Figures 2 and 3, the deflection part 16 extends along the nozzle axis N.

The deflection part 16 comprises a base plate 24 and a guiding assembly 26 comprising guiding members 28 extending upwardly from the base plate 24.

The base plate 24 is to be positioned on top of the upper end of the bundle of the fuel rods 4.

The base plate 24 is configured for protecting the fuel rods 4 from an impact and for allowing coolant fluid to flow through the base plate 24, preferably with limiting the pressure loss coefficient.

The base plate 24 is shaped as a grid provided with flow openings extending through the base plate 24. The base plate 24 is formed of plate members connected together with defining the flow openings between them.

The base plate 24 extends along an extension plane P. The extension plane P is perpendicular to the nozzle axis N.

Each plate member extends in the extension plane P along an extension line, between two opposed ends of the plate member. The extension line of each plate member is rectilinear or curvilinear.

Each plate member exhibits a cross-sectional shape (or "profile") in a cross-section taken perpendicularly to the extension line of the plate member.

The base plate 24 comprises a central region 30 comprising holes 32 configured for the guide thimbles 12 to extend through the base plate 24 for connection to upper part 18 of the top nozzle 10.

The central region 30 comprises central flow openings 34 for the coolant fluid to flow through the central region 30.

The central region 30 comprises for example one or more annular structures 36 defined at least in part by internal plate members 38, each annular structure 36 extending around the nozzle axis N.

The internal plate members 38 of each annular structure 36 are arranged circumferentially around the nozzle axis N and connected together to define the annular structure 36

The central region 30 comprises for example two or more concentric annular structures 36, in particular exactly two concentric annular structures 36.

When two or more annular structures 36 are provided, the annular structures 36 include an outermost annular structure 36 and an innermost annular structure 36. The outermost annular structures 36 has the greatest diameter and the innermost annular structures 36 has the smallest diameter.

Each annular structure 36 comprises for example a plurality of rings 40 distributed on the circumference of the annular structure 36. Each ring 40 defines a respective hole 32 for receiving a guide thimble 12.

Each internal plate members 38 of each annular structure 36 extends for example circumferentially between two successive rings 40 of the annular structure 36.

Each annular structure 36 comprises internal plate members 38 alternating with rings 40 along the circumference of the annular structure 36.

The central region 30 comprises for example interconnection plate members 42, each interconnection plate member 42 extending between two annular structures 36, in particular between two rings 40 of two distinct annular structures 36.

Each ring 40 of a first annular structure 36 of smaller diameter is for example connected by two interconnection plate members 42 to two adjacent ring 40 of a second annular structure 36 of larger diameter surrounding the first annular structure 36, each of said two interconnection plate members 42 connecting the guide member 38 of the first annular structure 36 to one of the two adjacent guide members 38 of the second annular structure 36. Each ring 40 of the second annular structure 36 is for example connected to one single ring 40 of the first annular structure 36 via one or more interconnection plate members 42.

The central flow openings 34 include for example a first central flow opening 34 delimited by the innermost annular structure 36 and/or second central flow openings 34 delimited between the outermost annular structure 36 and the innermost annular structure 36.

The second flow openings 34 are separated circumferentially by the interconnection plate members 42 extending between the outermost annular structure 36 and the innermost annular structure 36.

The base plate 24 comprises a peripheral region 44 surrounding the central region 30.

The peripheral region 44 is provided with peripheral flow openings 46 for the coolant flow to flow through the peripheral flow openings 46.

The peripheral region 44 comprises plate members 48, 50 connected together with defining the peripheral flow openings 46 of the peripheral region 44 and auxiliary plate members 52 extending across the peripheral flow openings 46.

The plate members 48, 50 comprises for example peripheral plate members 48 defining the periphery of the base plate 24 and intermediate plate members 50 extending between the central region 30 and the peripheral plate members 48.

The base plate 24 exhibits for example a polygonal contour, for example a regular polygonal contour, in particular a hexagonal contour.

Each peripheral plate member 48 defines a side of the polygonal contour. Adjacent peripheral plate members 48 are connected at a junction defining an apex of the polygonal contour.

Each intermediate plate member 50 extends for example between the central region 30 and the peripheral plate members 48, preferably radially relative to the nozzle axis N.

Each intermediate plate member 50 extends for example between the central region 30 and the junction between two adjacent peripheral plate members 48 defining an apex of the contour of the base plate 16 or between the central region 30 and an intermediate section of one of the peripheral plate members 48, in particular a middle section of said one of the peripheral plate members 48.

Each intermediate plate member 50 is for example connected to the central region 30 at a ring 40 of the outermost annular structure 36 of the central region 30.

In some examples, the number of ring 40 of the annular structure 36 of the central region 30 is twice the number of sides of the polygonal contour defined by the peripheral plate members 48 and each ring 40 is connected to the periphery of the base plate 24 by an intermediate plate member 50 extending, preferably radially with respect to the nozzle axis N, between said ring 40 and a junction between two adjacent peripheral plate members 48 or a middle section of one of the peripheral plate members 48.

Each auxiliary plate member 52 has for example a height and/or a cross-section area that is strictly inferior to that of each peripheral plate member 48 and/or that of each intermediate plate member 50.

Each auxiliary plate member 52 of the peripheral region 44 extends for example orthoradially.

The auxiliary plate members 52 of the peripheral region 44 extends for example parallel to the peripheral plate members 48.

Each auxiliary plate member 52 extends parallel to one peripheral plate member 48, more particularly parallel to the peripheral plate member 48 delimiting the peripheral opening 46 across which said auxiliary plate member 52 extends.

The base plate 24 comprises for example two or more auxiliary plate members 52 extending across each peripheral flow opening 46, in particular three auxiliary plate member 52 extending across each peripheral flow opening 46.

Each peripheral flow opening 46 is for example delimited by one circumferential connection plate members 38 of the central region 30, one peripheral plate member 48 of the peripheral region 44 and two intermediate plate members 50 of the peripheral region 44.

The peripheral flow openings 46 are for example separated circumferentially by the intermediate peripheral members 50.

The guiding assembly 26 exhibits a frustoconical overall shape.

The guiding assembly 26 is formed of a plurality of guiding member 28 distributed around the nozzle axis N.

Each guiding member 28 comprises a lower end 28A connected to the base plate 24 and an upper end 28B to be connected to upper part 18 of the top nozzle 10.

Each guiding member 28 has a guiding surface 28C facing radially outwardly with respect to the nozzle axis N and which is inclined relative to the nozzle axis N such that the radial distance between the guiding surface 28C and the nozzle axis N diminishes from the lower end 28A toward the upper end 28B of the guiding member 28.

The lower end 28B of each connection leg 28 is for example connected to an intermediate plate member 50.

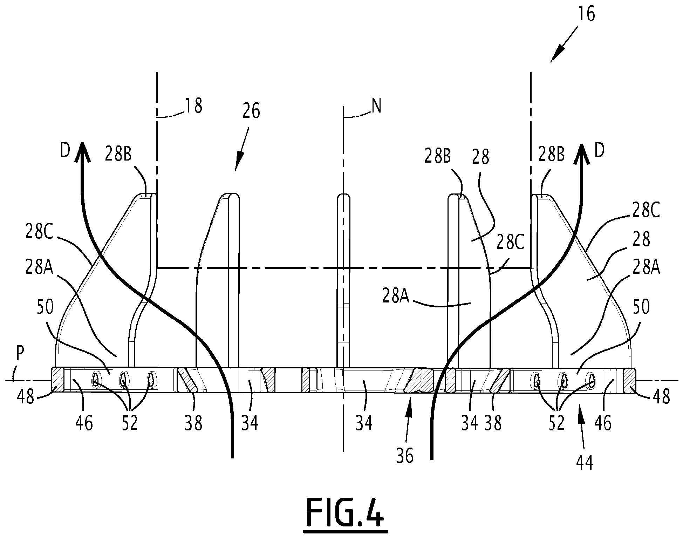

The guiding assembly 26 is preferably configured to fit onto a lower end of the upper part 18 of top nozzle 10, as illustrated in dash-dotted lines in Figure 4.

In particular, the upper ends 28B of the guiding members 28 are configured to fit around the lower end of the upper part 18 of the top nozzle 10.

Each guiding member 28 is for example in the shape of a plate extending in a plane extending parallel to the nozzle axis N, in particular in a plane radial relative to the nozzle axis N.

The base plate 24 has a contour corresponding to the contour of the bundle of fuel rods. The base plate 24 has for example a hexagonal contour.

The deflection part 16 is configured for improving the upward flow of the coolant through the deflection part 16 and/or around the top nozzle 10.

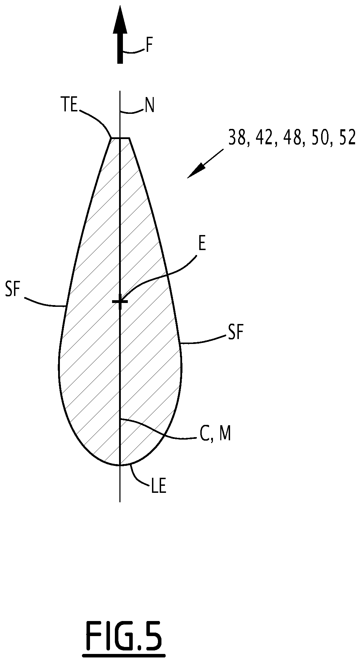

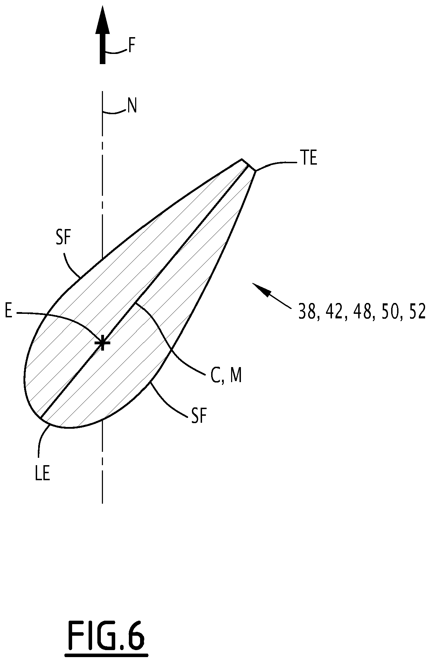

Advantageously, as illustrated on Figures 5 and 6, at least one of the plate members (internal plate member 38, interconnection plate member 42, peripheral plate member 48, intermediate plate member 50 or auxiliary plate member 52) of the base plate 24 of the deflection part 16 is streamlined, i.e. configured with a streamlined cross-sectional shape or "streamlined profile". Such a plate member is designated as a "streamlined plate member" in the following.

A streamlined profile designates a non-circular cross-section configured to promote flow of the coolant fluid through the base plate 16.

Each streamlined plate member has leading edge LE and a trailing edge TE. The leading edge LE of the streamlined plate member is adjacent the lower face 16A of the base plate 16 and the trailing edge TE is adjacent the upper face 16B of the base plate 16.

Each streamlined plate member has two opposed lateral faces SF. Each lateral face SF extends between the leading edge LE and the trailing edge TE of the streamlined plate member.

Each streamlined plate member has a cord C. The cord C is the imaginary straight line extending from the leading edge LE to the trailing edge TE of the streamlined plate member.

Each streamlined plate member has a midline M. The midline M is the imaginary line extending from the leading edge LE to the trailing edge TE with being located at equidistance from the two lateral faces SF of the streamlined plate member.

Each streamlined plate member has a width that is the distance between the two lateral faces SF of the streamlined plate member. The width of each streamlined plate member optionally varies progressively from the leading edge LE to the trailing edge TE.

Each streamlined plate member has a profile. The profile of the streamlined plate member is the shape of a cross section of the streamlined ligament taken in a plane perpendicular to the extension direction of the streamlined plate member.

In some examples, one or more streamlined plate members have a leading edge LE that is pointy or rounded and a trailing edge TE that is pointy or rounded.

In some examples, one or more streamlined plate members have a cross-sectional shape having a width which progressively increases from the leading edge LE of the streamlined plate member and/or that progressively decreases toward the trailing edge TE of the streamlined plate member.

Each streamlined plate member has for example a profile that is constant along the extension line E of the streamlined plate member. In a variant, the profile of one or more streamlined plate members varies along the extension line of the streamlined plate member.

In some examples, one or more streamlined plate members have an airfoil profile.

In some examples, at least one streamlined plate member has a profile that is an angular sector of a circle at the leading edge LE of the streamlined plate member and/or a pointy tip at the trailing edge TE of the streamlined plate member, with the width of the streamlined plate member increasing progressively and then decreasing progressively from the leading edge LE to the trailing edge TE of the streamlined plate member.

Each streamlined plate member may have a camber or no camber. A streamlined plate member with no camber has a midline M that is straight and coincides with the cord C, as in the examples illustrated on Figures 5 and 6.

The two opposed side faces SF of each streamlined plate member may be symmetrical relative to a median plane passing via the leading edge LE and the trailing edge TE of the streamlined ligament plate member or non-symmetrical.

In some examples, as illustrated on Figure 5, the streamlined plate members include at least one streamlined plate member which is streamlined in the main flow direction F, i.e. in the direction perpendicular to the extension plane P of the base plate 16 and in the direction of the nozzle axis N.

In some examples, as illustrated on Figure 5, one or more streamlined plate members have a cord that extends perpendicular to the extension plane P of the base plate 16. The cord of such a streamlined plate member is parallel with the nozzle axis N and the main flow direction F. Such a streamlined plate member is considered to have a profile "parallel" to the nozzle axis N.

In some examples, as illustrated on Figure 6, one or more streamlined plate members has a cord that is inclined with a non-zero angle relative to the normal to the extension plane P of the of the base plate 16. The cord of such a streamlined plate member is inclined with a non-zero angle relative to nozzle axis N and the main flow direction F. Such a streamlined plate member is considered to have a profile "inclined" with respect to the nozzle axis N. Such a streamlined plate member tends to deviate the coolant fluid from the main flow direction.

Preferably, one or more streamlined plate members have a NACA profile, i.e. an airfoil profile as developed by the NACA (National Advisory Committee for Aeronautics).

A NACA profile is identified by a reference with four digits of the type "NACAXXXX" in which the first digit defines the maximum camber (i.e. maximum distance between midline and cord) as percentage of the length of the cord (the distance between the leading edge and the trailing edge), the second digit defines the distance of maximum camber to the leading edge of the streamlined plate member in tenths of the length of the cord, and the last two digits define the ratio of the maximum width of the profile (the maximum distance between the two lateral faces of the streamlined plate member) to the length of the cord. A streamlined plate member with a profile with no camber has a NACA profile of the type NACA00XX.

Preferably, as illustrated on Figures 3 and 4, the internal plate members 38 and/or the intermediate plate members 40 of the central region 30 of the base plate 24 are streamlined.

Preferably, as also illustrated on Figure 3 and 4, the peripheral plate members 48, the intermediate plate members 50 and/or the auxiliary plate members 52 of the peripheral region 44 of the base plate 24 are streamlined.

Optionally, the base plate 24 comprises streamlined plate members which have a profile inclined with respect to the nozzle axis N such as to divert at least part of the coolant fluid flowing through the base plate 24 radially outwardly.

In particular, streamlined plate members of the central region 30 have a profile inclined with respect to the nozzle axis N such as to divert at least part of the coolant fluid flowing through the central region 30 radially outwardly.

For example, as illustrated on Figures 3 and 4, the internal plate members 38 of each annular structure 36 of the central region have a profile inclined with respect to the nozzle axis N such as to divert the flow of coolant fluid radially outwardly, as illustrated by arrow D on Figure 4.

In some examples, each interconnection plate member 42 of the central region 30 has a profile parallel to the nozzle axis N.

As illustrated on Figures 3 and 4, in some examples, the auxiliary plate members 52 exhibit an airfoil profile, in particular a NACA profile, preferably with no camber. This can promote streamlined flow of the coolant fluid through the peripheral region 44 of the base plate 24.

The auxiliary plate members 52 have a profile parallel to the nozzle axis N or inclined with respect to the nozzle axis N. This applies to auxiliary plate members 52 extending orthoradially or substantially radially. This can promote the flow of the coolant through the peripheral region 44, in particular when plate members of the central region 30 are configured to divert at least part of the flow radially outwardly.

In some examples, the peripheral plate members 48 and the intermediate plate members 50 of the peripheral region 44 are streamlined with a profile parallel to the nozzle axis N to promote flow of the coolant fluid in the main flow direction F parallel to the nozzle axis N through the peripheral region 44.

In operation, the deflection part 16 provided with a base plate 24 having streamlined plate members and/or an interface ring 26 with a streamlined profile promote the flow of the coolant fluid through and around the top nozzle 10.

The base plate 24 provided with streamlined plate members having profiles parallel to the nozzle axis N and the main flow direction F and/or streamlined plate members having profiles inclined to the nozzle axis N and the main flow direction F allow directing the flow of coolant fluid to reduce the flow resistance.

In particular, streamlined plate member with a profile inclined to divert the flow of coolant radially outwardly allows the coolant to more easily flow around the hold-down device 18 of the top nozzle, thus reducing the flow resistance.

Streamlined plate members with an airfoil profile, in particular a NACA profile, allows reducing the flow resistance efficiently.

The invention is not limited to the examples and variants described above. Other examples and variants may be contemplated.

In the base plate 24 of the deflection part 16 of Figures 2 - 4, the auxiliary plate members 52 of the peripheral region 44 extend orthoradially with respect to the nozzle axis N.

In other examples, the base plate 24 of the deflection part 16 comprises auxiliary plate members 52 of the peripheral region 44 extend substantially radially instead of extending orthoradially.

In an embodiment not represented, the guiding assembly 26 comprises a top guiding device, preferably configure to fit onto the upper part 18, provided for example as at least a ring extending in a plan parallel to the extension plane P, the ring extending along a ring extension line and exhibiting a streamline profile in a cross-section perpendicular to the ring extension line. The ring axis coincides with the nozzle axis N. The ring is for example connected to the guiding members 28, directly or via connection members similar to the plate members of the base plate 24. The connection members are for example elongated and/or streamlined, in particular in the flow direction F.

In another embodiment not represented, the top guiding device comprises a plurality of coaxial rings each having the characteristics of the ring disclosed in the previous paragraph. Either all the rings are in the same plan (and concentric) or the rings are in respective parallel plans. Interconnection between the rings and/or the guiding members 28 is done via connection members similar to the plate members of the base plate 24. The connection members are for example elongated and/or streamlined, in particular in the flow direction F.

## Claims

1. Top nozzle for a nuclear fuel assembly, the top nozzle having a nozzle axis (N) and being configured for the flow of a coolant fluid along a main flow direction (F) parallel to the nozzle axis (N), the top nozzle comprising a deflection part (16) and an upper part (18), the deflection part (16) comprising a base plate (24) and a guiding assembly (26) configured for connecting the base plate (24) to the upper part (18), the base plate (24) extending along an extension plane (P) perpendicular to the nozzle axis (N) and being formed of plate members (38, 42, 48, 50, 52) connected together with defining flow openings (34, 46) between them, each plate member (38, 42, 48, 50, 52) extending along an extension line (E), wherein one or more of the plate members (38, 42, 48, 50, 52) are streamlined, each streamlined plate member (38, 42, 48, 50, 52) exhibiting a streamlined profile in a cross-section perpendicular to the extension line (E) of the streamlined plate member (38, 42, 48, 50, 52).

2. Top nozzle according to claim 1, wherein the base plate (24) comprises streamlined plate members (48, 50, 52) having a profile parallel to the nozzle axis (N).

3. Top nozzle according to claim 1 or 2, wherein the base plate (24) comprises streamlined plate members (48, 50, 52) having a profile parallel to the nozzle axis (N) in a central region of the base plate and/or in a peripheral region of the base plate (24).

4. Top nozzle according to any one of the preceding claims, wherein the base plate (24) comprises streamlined plate members (38) having a profile inclined with respect to the nozzle axis (N) such as to deviate the coolant flow flowing through the base plate.

5. Top nozzle according to any one of the preceding claims, wherein the base plate (24) comprises streamlined plate members (38) having a profile inclined with respect to the nozzle axis (N) such as to deviate the coolant flow radially outwardly.

6. Top nozzle according to any one of the preceding claims, wherein the base plate (24) comprises streamlined plate members (38) having a profile inclined with respect to the nozzle axis (N) such as to deviate the coolant flow radially outwardly, said streamlined plate members being located in a central region (30) of the base plate (24).

7. Top nozzle according to any one of the preceding claims, wherein the base plate comprises a central region (30) comprising one or more annular structures, each annular structure being defined by plate members (38, 40) connected together with extending around the nozzle axis (N).

8. Top nozzle according to claim 7, comprises two or more concentric annular structures (36).

9. Top nozzle according to claim 7 or 8, wherein plate members (38) of the one or more annular structures (36) are streamlined and inclined with respect to the nozzle axis (N) to deviate the flow of coolant fluid, preferably radially outwardly.

10. Top nozzle according to any one of claims 7 - 9, wherein each annular structure (36) comprises rings (40) defining holes for receiving guide-thimbles (12) of the nuclear fuel assembly passing through the base plate, the rings (40) being connected by plate members (38) of the annular structure (36).

11. Top nozzle according to any one of the preceding claims, wherein the base plate (24) comprises a peripheral region (44) formed of peripheral plate members (48) and intermediate plate members (50) defining peripheral flow openings, the peripheral plate members (48) defining the contour of the base plate (24) and the intermediate plate (50) members extending between a central region (30) of the base plate (24) and the peripheral plate members (48).

12. Top nozzle according to claim 11, wherein the peripheral plate members (48) and the intermediate plate members (50) include streamlined plate members.

13. Top nozzle according to claim 11 or 12, wherein the peripheral region includes auxiliary plate members (52) extending across the peripheral flow openings (46).

14. Top nozzle according to claim 13, wherein the auxiliary plate members (52) are streamlined or at least include streamlined auxiliary plate members (52).

15. Top nozzle according to any one of claim 11 - 14, wherein each auxiliary plate member (52) has a height taken along the nozzle axis (N) and/or a cross-section area strictly inferior to that of each peripheral plate member (48) and intermediate plate member (50).

16. Top nozzle according to any one of the preceding claims wherein one or more streamlined plate members (52) exhibit an airfoil profile, in particular a NACA profile.

17. Top nozzle according to any one of the preceding claims, wherein , the guiding assembly (26) comprises a top guiding device having at least a ring in a plan parallel to the extension plane (P), the ring extending along a ring extension line and exhibiting a streamline profile in a cross-section perpendicular to the ring extension line, the ring axis coinciding with the nozzle axis (N) and the ring being connected to the guiding members (28), for example via connection members.

18. Nuclear fuel assembly comprising nuclear fuel rods (4) supported by a skeleton (6) comprises a bottom nozzle (8) and a top nozzle (10) according to anyone of the preceding claims, the fuel rods (4) extending between the bottom nozzle (8) and the top nozzle (10).
